(19) Europäisches Patentamt
European Patent Office
Office européen des brevets

(11) **EP 2 895 548 B1**

(12) **EUROPÄISCHE PATENTSCHRIFT**

(45) Veröffentlichungstag und Bekanntmachung des Hinweises auf die Patenterteilung:
**04.01.2017   Patentblatt 2017/01**

(21) Anmeldenummer: **13758879.4**

(22) Anmeldetag: **06.09.2013**

(51) Int Cl.:
***C08L 23/08*** *(2006.01)*

(86) Internationale Anmeldenummer:
**PCT/EP2013/068422**

(87) Internationale Veröffentlichungsnummer:
**WO 2014/040913 (20.03.2014 Gazette 2014/12)**

(54) **THERMOPLASTISCHES SCHÄUMUNGSAGENZ**

THERMOPLASTIC FOAMING AGENT

AGENT DE MOUSSAGE THERMOPLASTIQUE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **11.09.2012   EP 12183895**

(43) Veröffentlichungstag der Anmeldung:
**22.07.2015   Patentblatt 2015/30**

(73) Patentinhaber: **Sika Technology AG**
**6340 Baar (CH)**

(72) Erfinder: **GÖSSI, Matthias**
**CH-8610 Uster (CH)**

(74) Vertreter: **Sika Patent Attorneys**
**c/o Sika Technology AG**
**Corp. IP Dept.**
**Tüffenwies 16**
**Postfach**
**8048 Zürich (CH)**

(56) Entgegenhaltungen:
| | |
|---|---|
| EP-A1- 0 982 362 | EP-A1- 2 077 283 |
| WO-A1-02/00420 | WO-A1-02/22339 |
| WO-A2-2008/019400 | US-A- 5 356 941 |
| US-A- 5 932 659 | US-A- 6 150 428 |

EP 2 895 548 B1

**Beschreibung**

**Technisches Gebiet**

Die Erfindung betrifft eine schäumbare thermoplastische Mischung, den daraus erhältlichen Schaumstoff sowie ein Verfahren zu dessen Herstellung.

**Stand der Technik**

Langkettenverzweigte Polymere werden heute zum Stabilisieren polymerer Schmelzen bei hoher Dehnbeanspruchung verwendet, z.B. bei Prozessen wie dem Melt-Blowing zur Herstellung von dünnen Kunststoffbahnen (Plastiksäcke) oder dem biaxialen Verstrecken von Schrumpffolien (Verpackungen) in großen Mengen zur Stabilisierung der polymeren Schmelzen eingesetzt. Durch die langkettenverzweigten Polymere wird die Dehnverhärtung der Schmelze erzielt oder massiv gesteigert, was ein Abreißen der Schmelze während der oben genannten Prozesse verhindert. Beispiele für hierfür eingesetzte Mischungen sind Blends aus LDPE (Low density PE) und HDPE (High density PE-Polymer).

Der Effekt der Dehnverhärtung wird auch zur Herstellung von polymeren Schäumen niedriger Dichte ausgenutzt. Wie z.B. in US 4226946 oder Klempner, D.; Frisch, K. C., Handbook of Polymeric Foams and Foam Technology, Hanser Publisher, München, 1991, S. 238 beschrieben, werden hierfür lineare Polymere wie HDPE oder PP mit hohen Anteilen langkettenverzweigter Polymere vermischt oder mit Radikalspendern wie organischen Peroxiden während des Plastifizierprozesses teilweise zu langkettenverzweigten Polymeren modifiziert, um in der Schmelze der resultierenden Mischung dehnverhärtendes Verhalten zu erzielen. Die Schmelze von langkettenverzweigten Polymeren weist eine erhöhte Viskosität auf, was beim Melt-Blowing und beim biaxialen Verstrecken von Verpackungsfolien unerheblich ist. Allerdings ist die erhöhte Viskosität für Spritzgießanwendungen nachteilig.

Schaumstoffe werden im allgemeinen gebildet, indem eine Polymerschmelze mittels eines Treibmittels geschäumt und die geschäumte Struktur dann durch Abkühlen fixiert wird. Die bei hohen Temperaturen (> Schmelztemperatur (Tm)) gebildeten polymeren Schäume werden gewöhnlich stabilisiert, um den Kollaps der polymeren Schaumstruktur zu verhindern.

Um einen Schaum geringer Dichte zu erhalten, müssen nach der Bildung stabiler Keime die Zellen wachsen. Ein zu hohes Zellwachstum führt zur Koaleszenz und zum Kollaps der Schaumzellen bevor sie stabilisiert werden. Eine zu niedrige Zellwachstumsrate führt andererseits zu einer relativ geringen Volumenexpansion und damit zu Materialien relativ hoher Dichte. Die Kontrolle des Zellwachstums ist somit entscheidend für die Herstellung von Schäumen niedriger Dichte und mit homogener geschlossener Zellstruktur. Reine EVA-Polymere zeigen z.B. häufig ein zu hohes Zellwachstum, so dass eine Stabilisierung erforderlich ist.

Die Stabilisierung ist umso notwendiger, je niedriger die Dichte des Schaumstoffs sein soll, d.h. je größer die Volumenexpansion ist. Beispielsweise werden bei Mischungen von herkömmlichen EVA-Polymeren mit Treibmittel in einer ausreichenden Menge um Volumenexpansionen von mehr als 1000% zu erreichen, unkontrolliertes Wachstum und ein Kollaps der aufgeschäumten Materialien beobachtet.

Eine Stabilisierung wird gewöhnlich entweder mittels Schaumstabilisatoren oder durch das Vernetzen der thermoplastischen Schmelze erreicht. Schaumstabilisatoren bewirken eine Änderung der Gaspermeabilität, wobei das Blähgas langsamer aus der Blase heraus diffundiert als die umgebende Luft hinein. Dadurch wird zwischenzeitlich ein Gasüberdruck in den Blasen des Schaumes aufrechterhalten, welcher den Schaum vor dem Kollaps bewahrt. Eingesetzte Schaumstabilisatoren sind niedermolekulare, amphiphile Moleküle, z.B. Polyether-modifizierte Polysiloxane (Tegostab®-Produkte) oder Glycerinmonostearat (Dimodan HP® von Danisco). Das Vernetzen der polymeren Schmelze verhindert dagegen, dass die Schmelze fließt. Der Einsatz niedermolekularer Schaumstabilisatoren birgt jedoch Probleme beim Einmischen und Erzeugen von stabilen Mischungen in apolaren Massenkunststoffen wie PE und iPP.

Es ergeben sich somit spezielle Anforderungen an Formulierungen, die sowohl zum Spritzgießen als auch zum Schäumen geeignet sein sollen, da hier sowohl die Schaumstabilität als auch die Viskosität zu berücksichtigen sind.

Aus dem Stand der Technik sind bereit vielfältige schäumbare Mischungen auf Basis thermoplastischer Polymere bekannt.

So beschreibt die US 5,356,941 schäumbare Zusammensetzungen auf Basis von thermoplastischen Polymeren wie Polyethylenvinylacetat und Polyethylenacryl- oder methacrylsäure-Copolymeren, die mit Blähmitteln in Anwesenheit eines Peroxidvernetzers geschäumt werden.

Die WO 02/22339 A1 beschreibt offenzellige Schäume auf Basis von Polyethylenvinylacetat und einem Terpolymer aus Ethylen, Vinylacetat und Kohlenmonoxid, die mit einem Blähmittel in Anwesenheit eines Tensids geschäumt werden.

Die US 6,150,428 beschreibt ein expandierbares Versiegelungsmaterial auf Basis eines gepfroften Anhydrid Polymers und eines Epoxy-terminierten Additiv-Polymers, das mit Hilfe eines Blähmittels geschäumt wird.

Die WO 2008/019400 A1 beschreibt härtbare Versiegelungszusammensetzungen auf Basis von strahlenvernetzbarem Gummi, und einem Gemisch das Vinylacetat, Polyvinylalkohol, ein Harz und einen Photoinitiator enthält. Im einzigen Beispiel der WO 2008/019400 A1 wird eine Zusammensetzung beschrieben, in der neben UV-härtbarem SBS-Gummi Füllstoffe, Ethylenvinylacetat-Copolymere, thermoplastische Pentaerythrolester-Harze, Blähmittel und Photoinitiatoren enthalten sind.

Schließlich offenbart die US 5,932,659 Polymergemische aus Polyethylenvinyacetat und Polyethylen sehr niedriger Dichte (VLDPE) als Ersatz für EPDM und andere Elastomere, die unter Zusatz von Blähmitteln geschäumt werden können. In keinem dieser Dokumente werden langkettenverzweigte Polymere als Schaumstabilisatoren vorgeschlagen.

**Darstellung der Erfindung**

Aufgabe der Erfindung ist die Bereitstellung von Mischungen, die zur Produktion von geschäumten thermoplastischen Produkten geeignet sind, insbesondere solchen niederer Dichte. Es sollen Mischungen von thermoplastischen Polymeren bereitgestellt werden, welche sich zu niedrigen Dichten (z.B. 50 kg/m$^3$; Volumenexpansion 2000%) aufschäumen lassen und dennoch gut spritzgießfähig sind. Darüber hinaus soll die Erfindung sowohl für polare als auch für apolare Polymermischungen ohne Probleme anwendbar sein.

Die Aufgabe wird gelöst durch eine schäumbare thermoplastische Mischung, umfassend (A) mindestens ein thermoplastisches Polymer ausgewählt aus Ethylen-Vinylacetat-Copolymer (EVA), Ethylen-Methylacrylat-Copolymer (EMA), Ethylen-Butylacrylat-Copolymer (EBA), Ethylen-Hexen-Copolymer, Ethylen-Buten-Copolymer, Etylen-Octen-Copolymer, Polyethylen (PE), Polypropylen (PP) und Ethylen-Propylen-Copolymer, (B) mindestens ein langkettenverzweigtes Polymer als Schaumstabilisator ausgewählt aus Ethylen-Vinylacetat-Copolymer (EVA), Ethylen-Methylacrylat-Copolymer (EMA), Ethylen-Butylacrylat-Copolymer (EBA), Ethylen-Hexen-Copolymer, Ethylen-Buten-Copolymer, Etylen-Octen-Copolymer, Polyethylen (PE), Polypropylen (PP) und Ethylen-Propylen-Copolymer und (C) mindestens ein chemisches Treibmittel, wobei das langkettenverzweigte Polymer (B) in einer Menge von 1 bis 30 Gew.-%, bezogen auf das Gesamtgewicht von thermoplastischem Polymer (A) und langketten-verzweigtem Polymer (B), enthalten ist und für das thermoplastische Polymer (A) und das langkettenverzweigte Polymer (B) mindestens eines der folgenden Unterscheidungsmerkmale gilt: 1) der Wert des Schmelzflussindex (MFI) des langkettenverzweigten Polymers (B) (MFI(B)) ist kleiner als der MFI-Wert des thermoplastischen Polymers (A) (MFI(A)), wobei der MFI(B) maximal 50% des MFI(A) beträgt, 2) der g-Wert des langkettenverzweigten Polymers (B) (g(B)) ist kleiner als der g-Wert des thermoplastischen Polymers (A) (g(A)), wobei g(B) maximal 80% von g(A) ist, 3) der Polymertyp des langkettenverzweigten Polymers (B) unterscheidet sich von dem Polymertyp des thermoplastischen Polymers (A).

Überraschenderweise bewirkt der Zusatz von langkettenverzweigten Polymeren in schäumbaren thermoplastischen Polymermischungen, wobei mindestens einer der vorstehend genannten Unterscheidungsmerkmale 1 bis 3 erfüllt sind, bis zu einem gewissen Anteil keine oder nur eine relativ geringe Viskositätserhöhung, wobei gleichzeitig eine sehr gute Stabilisierung der Schäume erreicht wird. Durch die Zugabe der langkettenverzweigten Polymere kann eine verbesserte Volumenexpansion erzielt werden. Obwohl nicht vernetzt und in den rheologischen Eigenschaften nicht oder wenig verändert, kollabieren Schaumstrukturen aus der erfindungsgemäßen Mischung durch die Zugabe der langkettenverzweigten Polymere zeitlich verzögert. Anscheinend bewirken die langkettenverzweigten Polymere eine Reduktion der Blähgaspermeabilität. Zudem sind die langkettenverzweigten Polymere im Vergleich zu den konventionellen niedermolekularen Schaumstabilisatoren granulierbare Rohstoffe, was die Handhabung im Extrusionsprozess vereinfacht.

Im folgenden wird die Erfindung im Einzelnen erläutert.

Die schäumbare thermoplastische Mischung umfasst ein oder mehrere thermoplastische Polymere (A) und ein oder mehrere langkettenverzweigte Polymere (B) als Schaumstabilisator. Bei dem thermoplastischen Polymer (A) kann es sich z.B. um ein lineares, kurzkettenverzweigtes oder langkettenverzweigtes thermoplastisches Polymer handeln.

Kurzkettenverzweigte und langkettenverzweigte Polymere sind dem Fachmann gut bekannt. Es handelt sich dabei um Polymere, die Kurzkettenverzweigungen bzw. Langkettenverzweigungen aufweisen. Kurz- bzw. Langkettenverzweigungen sind Seitengruppen, die nicht an jeder Monomereinheit des Polymers vorliegen. Kurzkettenverzweigte Polymere weisen im allgemeinen oligomere Seitengruppen mit einer, im Vergleich zur Molmasse des Polymeren, sehr niedrigen Molmasse auf. Langkettenverzweigte Polymere weisen im allgemeinen polymere Seitengruppen auf.

In der Regel sind die Seitengruppen der langkettenverzweigten Polymere verschlauft, was bei den kurzkettenverzweigten nicht der Fall ist. Dies führt dazu, dass die Langkettenverzweigungen sowohl einen Einfluss auf Festkörpereigenschaften wie die Kristallinität haben, insbesondere aber die rheologischen Eigenschaften deutlich verändern können. Kurzkettenverzweigungen führen dagegen gewöhnlich zu einer Änderung der Kristallinität. Langketten und Kurzketten beeinflussen die Eigenschaften von Polymeren somit sehr unterschiedlich. Durch diese Unterschiede in den Eigenschaften, insbesondere durch die Verschlaufbarkeit der Langkettenverzweigungen, sind langkettenverzeigte und kurzkettenverzweigte Polymere gut unterscheidbar. Per Definition ist ein Polymer mit einem g-Wert unter 1 langkettenverzweigt.

Das thermoplastische Polymer (A) ist ausgewählt aus Ethylen-Vinylacetat-Copolymer (EVA), Ethylen-Acrylsäureester-Copolymer (EMA oder EBA), Ethylen-α-Olefin-Copolymeren (Ethylen-Hexen-Copolymer, Ethylen-Buten-Copolymer oder Etylen-Octen-Copolymer), Polyethylenen (PE), Polypropylenen (PP) sowie Ethylen-Propylen-Copolymeren. Dabei ist EMA die Kurzbezeichnung für Ethylen-Methylacrylat-Copolymer und EBA die für Ethylen-Butylacrylat-Copolymer. Vorzugsweise enthalten diese Polymere keine über die genannten Bestandteile hinausgehenden weiteren Monomere. Ebenso ist es bevorzugt, wenn das thermoplastische Polymer A frei von reaktiven funktionellen Gruppen, wie insbesondere Keton-, Säure und Anhydridgruppen, ist. Bei dem thermoplastischen Polymer (A) kann es sich um jedes übliche thermoplastische Polyolefin aus der genannten Reihe handeln, das sich für schäumbare thermoplastische Mischungen eignet. Das thermoplastische Polymer (A) ist bevorzugt ein Ethylen-Vinylacetat-Copolymer (EVA).

Als langkettenverzweigtes Polymer (B) kann jedes übliche langkettenverzweigte Polymer ausgewählt aus Ethylen-Vinylacetat-Copolymer (EVA), Ethylen-Acrylsäureester-Copolymer (EMA oder EBA), Ethylen-α-Olefin-Copolymeren (Ethylen-Hexen-Copolymer, Ethylen-Buten-Copolymer oder Etylen-Octen-Copolymer), Polyethylenen (PE), Polypropylenen (PP) sowie Ethylen-Propylen-Copolymeren als Schaumstabilisator verwendet werden. Langkettenverzweigte Polymere sind im Handel erhältlich und können vom Fachmann ohne weiteres gemäß bekannter Verfahren hergestellt werden. Es handelt sich dabei um übliche Polymere, die aber zusätzlich Langkettenverzweigungen aufweisen. Das langkettenverzweigte Polymer (B) ist bevorzugt ebenfalls ein thermoplastisches Polymer. Das langkettenverzweigte Polymer (B) weist insbesondere keine funktionellen Gruppen auf, über die eine chemische Anbindung an die Polymere der schäumbaren thermoplastischen Mischung möglich wäre, d.h. über das langkettenverzweigte Polymer (B) kann keine Vernetzung in der Polymermischung erfolgen. Das langkettenverzweigte Polymer (B) ist bevorzugt ein Ethylen-Vinylacetat-Copolymer (EVA).

Beispiele für kommerziell erhältliche langkettenverzweigte Polymere (B) sind LDPE und Ethylen-Copolymere, die in LDPE - Reaktoren (Autoklav- oder Röhrenreaktor) hergestellt werden, wie Ethylen-Vinylacetat-Copolymer (EVA), Ethylen-Acrylsäureester-Copolymer (EMA und EBA). Die Ethylen-Copolymere weisen jedoch eine geringere Anzahl an Verzweigungspunkten auf als LDPE. Langkettenzweigte Polymere sind ferner allgemein erhältlich, indem man Radikalbildner wie organische Peroxide oder hochenergetische Ionisationsstrahlung auf Polymere einwirken lässt, in der Regel bei erhöhten Temperaturen. Diese Verfahren zur Herstellung langkettenzweigter Polymere sind dem Fachmann bekannt.

Damit das langkettenverzweigte Polymer als Schaumstabilisator wirken kann, ist es ferner erforderlich, dass sich das thermoplastische Polymer (A) und das langkettenverzweigte Polymer (B) in einer Charakteristik ausgewählt aus dem Schmelzflussindex (MFI), dem Verzweigungsgrad und der chemischen Zusammensetzung unterscheiden.

Daher gilt für das thermoplastische Polymer (A) und das langkettenverzweigte Polymer (B) mindestens eines der folgenden Unterscheidungsmerkmale: 1) der Wert des Schmelzflussindex (MFI) des langkettenverzweigten Polymers (B) (MFI(B)) ist kleiner als der MFI-Wert des thermoplastischen Polymers (A) (MFI(A)), wobei der MFI(B) maximal 50% des MFI(A) und bevorzugt maximal 25% des MFI(A) beträgt, 2) der g-Wert des langkettenverzweigten Polymers (B) (g(B)) ist kleiner als der g-Wert des thermoplastischen Polymers (A) (g(A)), wobei g(B) maximal 80% von g(A) ist und bevorzugt maximal 60% von g(A) ist, 3) der Polymertyp des langkettenverzweigten Polymers (B) unterscheidet sich von dem Polymertyp des thermoplastischen Polymers (A).

Der Schmelzflussindex (MFI) des eingesetzten thermoplastischen Polymers (A) kann in breiten Bereichen variieren. Der MFI des thermoplastischen Polymers (A) kann z.B. im Bereich von 0,1 bis 100 g/10 min liegen, liegt aber bevorzugt im Bereich von 0,5 bis 40 g/10 min und bevorzugter im Bereich von 1 bis 10 g/10 min. Der Schmelzflussindex (MFI) des eingesetzten langkettenverzweigten Polymers (B) kann ebenfalls in breiten Bereichen variieren. Der MFI des langkettenverzweigten Polymers (B) liegt z.B. im Bereich von 0,01 bis 10 g/10 min und bevorzugt im Bereich von 0,1 bis 5. Der MFI wird bei 190°C, 2,16 kg gemäß ASTM D1238 bestimmt.

Der g-Wert ist ein Maß für den Verzweigungsgrad eines Polymers. Durch den g-Wert können langkettenverzweigte Polymere recht einfach charakterisiert werden. Der g-Wert von Polyolefinen bzw. den hier diskutierten Polymeren und Copolymeren kann mittles Hochtemperatur-GPC bestimmt werden und ist definiert als Verhältnis der intrinsischen Viskosität des zu analysierenden Polymeren zur intrinsischen Viskosität eines linearen Polymeren, hier der PE-Standard NBS 1475 (Kulin, L. I.; Meijerink, N. L.; Starck, P. Pure and Applied Chemistry 1988, 6, (9), 1403 - 1415). Den sogenannten g-Plot erhält man durch die Auftragung des g-Wertes als Funktion der entsprechenden Molmassen-Fraktion. Die hier verwendeten Werte entsprechen dem g-Wert beim Gewichtsmittel der Molmasse ($M_w$).

Der g-Wert des thermoplastischen Polymers (A) kann z.B. im Bereich von 0,20 bis 1 liegen, bevorzugt im Bereich von 0,2 bis 0,5. Der g-Wert des eingesetzten langkettenverzweigten Polymers (B) liegt z.B. im Bereich von 0,05 bis 0,8, bevorzugt im Bereich von 0,05 bis 0,3.

Der Verzweigungsgrad von Polymeren, insbesondere von langenkettenverzweigten Polymeren, kann alternativ über den LCBI (Long Chain Branch Index) charakterisiert werden. Ein geeignetes langkettenverzweigtes Polymer (B) weist z.B. bevorzugt einen LCBI von mindestens 1,1 und bevorzugt mindestens 1,25 auf. Das Verfahren zur Bestimmung des LCBI wird nachstehend im experimentellen Teil erläutert.

Der Unterschied im Verzweigungsgrad zwischen thermoplastischem Polymer (A) und langkettenverzweigtem Polymer (B) könnte daher statt durch den g-Wert (Unterscheidungsmerkmal 2) gegebenenfalls auch alternativ durch den LCBI ausgedrückt werden. Danach wäre der LCBI des langkettenverzweigten Polymers (B) (LCBI(B)) um mindestens 10% größer als der LCBI des thermoplastischen Polymers (A) (LCBI(A)).

Eine dritte Möglichkeit für das langkettenverzeigte Polymer (B), um sich in der Charakteristik von dem thermoplastischen Polymer (A) zu unterscheiden, besteht darin, dass sich der Polymertyp des langkettenverzweigten Polymers (B) von dem des thermoplastischen Polymers (A) unterscheidet. Polymertyp bezieht sich hier auf die chemische Zusammensetzung des Polymers bzw. auf die darin enthaltenen Monomere. Gemäß der vorliegenden Erfindung kann das thermoplastische Polymer (A) und auch das langkettenverzweigte Polymer (B) aus 9 unterschiedlichen Polymertypen, nämlich EVA, EMA, EBA, Ethylen-Hexen-Copolymer, Ethylen-Buten-Copolymer, Etylen-Octen-Copolymer, PE, PP und Ethylen-Propylen-Copolymer ausgewählt werden. Thermoplastisches Polymer (A) und langkettenverzweigtes Polymer (B) unterscheiden sich daher im Polymertyp, wenn nicht beide EVA, EMA, EBA, Ethylen-Hexen-Copolymer, Ethylen-Buten-Copolymer, Etylen-Octen-Copolymer, PE, PP bzw. Ethylen-Propylen-Copolymer sind. Wenn das thermoplastische Polymer (A) EVA ist und sich das langkettenverzweigte Polymer (B) im Polymertyp unterscheiden soll, kann es aus einem der 8 anderen Polymeren, z.B. PE, ausgewählt werden.

Sofern sich thermoplastisches Polymer (A) und langkettenverzweigtes Polymer (B) im Polymertyp unterscheiden, ist es bevorzugt, dass das thermoplastische Polymer (A) ausgewählt ist aus Ethylen-Vinylacetat-Copolymer (EVA), Ethylen-Methylacrylat-Copolymer (EMA) oder Ethylen-Butylacrylat-Copolymer (EBA) und das langkettenverzweigte Polymer (B) ausgewählt ist aus Polyethylen (PE), Ethylen-Hexen-Copolymer, Ethylen-Buten-Copolymer oder Etylen-Octen-Copolymer oder Ethylen-Propylen-Copolymer, oder es ist bevorzugt, dass das thermoplastische Polymer (A) ausgewählt ist aus Polypropylen (PP) oder Ethylen-Propylen-Copolymer und das langkettenverzweigte Polymer (B) ausgewählt ist aus Polyethylen (PE) Ethylen-Vinylacetat-Copolymer (EVA), Ethylen-Methylacrylat-Copolymer (EMA) oder Ethylen-Butylacrylat-Copolymer (EBA).

Sofern sich thermoplastisches Polymer (A) und langkettenverzweigtes Polymer (B) im Polymertyp unterscheiden, ist es besonders bevorzugt, dass das thermoplastische Polymer (A) ein Ethylen-Vinylacetat-Copolymer (EVA) ist und das langkettenverzweigte Polymer (B) ein Polyethylen (PE), insbesondere ein LDPE, ist.

In einer bevorzugten Ausführungsform sind das thermoplastische Polymer (A) und das langkettenverzweigte Polymer (B) vom gleichen Polymer- bzw. Copolymertyp, wobei sich die Polymere (A) und (B) im MFI-Wert gemäß Unterscheidungsmerkmal 1) wie vorstehend definiert oder bevorzugt im g-Wert gemäß Unterscheidungsmerkmal 2) wie vorstehend definiert unterscheiden. Wenn beide Polymere vom gleichen Polymertyp sind, sind das thermoplastische Polymer (A) und das langkettenverzweigte Polymer (B) bevorzugt beide ein Ethylen-Vinylacetat-Copolymer.

In einer bevorzugten Ausführungsform handelt es sich auch bei dem thermoplastische Polymer (A) um ein langkettenverzweigtes Polymer und bei dem langkettenverzweigten Polymer (B) um ein stärker langkettenverzweigtes Polymer, so dass das Unterscheidungsmerkmal 2) wie vorstehend definiert erfüllt ist.

Eine besonders bevorzugte schäumbare thermoplastische Mischung umfasst ein langkettenverzweigtes EVA als thermoplastisches Polymer (A) und ein stärker langkettenverzweigtes EVA als Schaumstabilisator (B), so dass der g-Wert des langkettenverzweigten Polymers (B) maximal 80%, bevorzugt maximal 60%, des g-Werts vom thermoplastischem Polymer (A) ist. Eine höhere Verzweigung kann z.B. durch Umsetzung von wenig langkettenverzweigten Polymeren, bevorzugt EVA-Polymeren, mit Radikalbildnern oder Bestrahlung mit hochenergetischer Ionisationsstrahlung erreicht werden, wodurch radikalische Stellen im Polymer gebildet werden, die zu mehr Langkettenverzweigung führen.

Die Anteile des thermoplastischen Polymers (A) und des langkettenverzweigten Polymers (B) in der schäumbaren thermoplastischen Mischung können in breiten Bereichen variieren und hängen u.a. von der Art der eingesetzten Polymere, der Backtemperatur und der beabsichtigten Anwendung ab. Der Anteil des thermoplastischen Polymers (A) kann aber z.B. zweckmäßigerweise mindestens 40 Gew.% und bevorzugt mindestens 50 Gew.-%, bezogen auf das Gesamtgewicht der schäumbaren thermoplastischen Mischung, betragen. Der Anteil des thermoplastischen Polymers (A) liegt z.B. im Bereich von 40 bis 97 Gew.-%, bevorzugt 50 bis 90 Gew.-%, bezogen auf das Gesamtgewicht der schäumbaren thermoplastischen Mischung.

Das langkettenverzweigte Polymer (B) als Schaumstabilisator liegt in der schäumbaren thermoplastischen Mischung in einer Menge von 1 bis 30 Gew.-%, bevorzugt 1 bis 20 Gew.-% und besonders bevorzugt 1 bis 10 Gew.-%, bezogen auf das Gesamtgewicht von thermoplastischem Polymer (A) und langkettenverzweigtem Polymer (B), vor.

Bei Gehalten von nicht mehr als 10 Gew.-% an Schaumstabilisator wurde für alle Schaumstabilisatoren wie in der vorliegende Erfindung definiert überraschenderweise keine Zunahme der Null-Viskosität festgestellt. Dadurch kann das Aufschäumverhalten positiv beeinflusst werden, ohne die rheologischen Eigenschaften (sowohl bezüglich Scherung als auch Dehnung) zu verändern. Es kommt also kein Viskositätseffekt zum Tragen, sondern eine Reduktion der Blähgas-Permeabilität, die bisher nur niedermolekularen Schäumungsagenzien zugeschrieben wurde.

Eine zweite Besonderheit bestand darin, dass bei Einsatz von langkettenverzweigten Polymeren (B), insbesondere EVA-Polymere, die sich im Verweigungsgrad gemäß Unterscheidungsmerkmal 2) vom thermoplastischen Polymer (A) unterscheiden, bei einem Anteil von 10 bis 30 Gew.-% eine zusätzliche Stabilisierung des Schaums beobachtet werden konnte. Bei Einsatz von langkettenverzweigten Polymeren, die sich im MFI-Wert gemäß Unterscheidungsmerkmal 1) oder dem Polymertyp gemäß Unterscheidungsmerkmal 3), aber nicht im Verzweigungsgrad gemäß Unterscheidungsmerkmal 2) vom thermoplastischen Polymer (A) unterschieden, konnte diese Schaumstabilisierung bei einem Anteil von 10 bis 30 Gew.-% nicht beobachtet werden.

In einer besonders bevorzugten Ausführungsform umfasst die schäumbare thermoplastische Mischung ein EVA-Copolymer mit einem MFI von 3 bis 10 g/10 min als thermoplastisches Polymer (A) und, bezogen auf das Gesamtgewicht von thermoplastischem Polymer (A) und langkettenverzweigtem Polymer (B), 1 bis 10 Gew.-% von einem langkettenverzweigten EVA-Copolymer als Schaumstabilisator (B), das bevorzugt ein LCBI von 1,25 oder höher aufweist. Für diese Ausführungsform gilt bevorzugt das Unterscheidungsmerkmal 2).

Ein weiterer Vorteil der erfindungsgemäßen Mischung besteht darin, dass im Gegensatz zu den klassischen niedermolekularen Stabilisatoren die langkettenverzweigten Polymere der Struktur der Matrixpolymere (A) angepasst werden können. Auf diese Weise kann die Kompatibilität der Polymere verbessert werden.

Die schäumbare thermoplastische Mischung umfasst ferner ein oder mehrere chemische Treibmittel. Es können alle üblichen und bekannten chemischen Treibmittel eingesetzt werden, z.B. feste, flüssige oder gasförmige Treibmittel, wobei feste bevorzugt sind. Geeignete Treibmittel sind dem Fachmann bestens bekannt und im Handel erhältlich.

Das chemische Treibmittel ist in der Regel ein festes Treibmittel. Das chemische Treibmittel wird der Polymermischung aus den Polymeren (A) und (B), die zweckmäßigerweise als Granulatmischung bereitgestellt wird, in der Regel als Pulver oder Granulat zugemischt. Die chemischen Treibmittel werden bei den Verarbeitungstemperaturen gewöhnlich unter Abspaltung der Treibgase (z.B. $N_2$, CO, $CO_2$) zersetzt.

Beispiele für chemische Treibmittel sind organische Treibmittel, wie Azodicarbonamid, Azo-bis(isobutyronitril), Diphenyloxid-4,4'-disulfonsäurehydrazid und N-Nitroso-Verbindungen, die häufig mit Keimbildnern, wie Talkum, Katalysatoren wie Metalloxiden oder Farbpigmenten, kombiniert werden. Anorganische chemische Treibmittel sind z. B. Natriumhydrogencarbonat oder Ammoniumcarbonat, die häufig mit schwachen organischen Säuren, wie Citronensäure, kombiniert werden. Ein bevorzugtes Treibmittel ist Azodicarbonamid, z.B. katalysiertes Azodicarbonamid, das z.B. als Unicell®DL 75N im Handel erhältlich ist.

Der Anteil des Treibmittels kann in breiten Bereichen variieren und hängt u.a. von der Art des Treibmittels, der eingesetzten Polymermischung und der gewünschten Dichte des herzustellenden Schaumstoffs ab. Der Anteil des Treibmittel kann z.B. im Bereich von 0,1 bis 20 Gew.-%, bevorzugt von 5 bis 15 Gew.-%, bezogen auf das Gesamtgewicht der schäumbaren thermoplastischen Mischung, liegen.

Bei der schäumbaren thermoplastischen Mischung handelt es sich vorzugsweise um eine spritzgießfähige Mischung, d.h. die Mischung weist bei den Verarbeitungstemperaturen eine zum Spritzgießen geeignete Viskosität auf. Sie ist insbesondere spritzgießfähig ohne aufzuschäumen.

Die schäumbare thermoplastische Mischung kann ferner ein oder mehrere Additive enthalten. Beispiele für gegebenenfalls einsetzbare Additive sind Thixotropiermittel, Tenside, Verarbeitungshilfsmittel wie Wachse, Vernetzungsmittel wie organische Peroxide, Antioxidantien, UV-Stabilisatoren, Farbstoffe, Biozide oder Flammschutzmittel. Die Mischung kann z.B. bevorzugt mindestens ein Additiv ausgewählt aus Verarbeitungshilfsmitteln wie Wachsen, Thixotropiermitteln wie hydrophober Kieselsäure, Kreide oder Kalk, Tensiden, Nukleierungsmitteln wie Talk oder Kalk, Vernetzungsmitteln wie organischen Peroxiden, und Aktivatoren für chemische Treibmittel wie ZnO, Zn-Stearaten, Harnstoff oder Stearinsäure, umfassen. Ebenso kann die Zusammensetzung auch frei von Vernetzungsmitteln sein.

Durch Einsatz von einem Thixotropiermittel, einem Tensid oder Mischungen kann eine zusätzliche Stabilisierung der Schäume erreicht werden. Bei den Thixotropiermitteln handelt es sich um inerte Füllstoffe, die die Fließspannung erhöhen können. Als Tensid eignen sich amphiphile Materialien, die die Polarität der Zellwände beeinflussen können oder zur weiteren Reduktion der Blähgaspermeation während des Schäumens führen. Tenside und/oder Thixotropiermittel können z.B. in einer Gesamtmenge von 0,1 bis 6 Gew.-%, bevorzugt 1 bis 5 Gew.-%, bezogen auf das Gesamtgewicht der schäumbaren thermoplastischen Mischung, eingesetzt werden.

Beispiele für Thixotropiermittel sind Kreide, Kalk und $SiO_2$-Teilchen, bevorzugt hydrophobe $SiO_2$-Teilchen, wie z.B. hydrophobe pyrogene Kieselsäure. Diese können durch Oberflächenmodifizierung von pyrogenen Kieselsäuren mit hydrophoben Verbindungen wie Polydimethylsiloxan oder Dimethyldichlorsilan erhalten werden. Beispiele für entsprechende Handelsprodukte sind HDK H18 von Wacker und Aerosil®R972 von Evonik. Beispiele für geeignete Tenside sind Glycerinmonostearat, Siloxan-Glycol-Randomcopolymere und Polyether-modifizierte Polysiloxane. Im Handel erhältliche Tenside, die für die schäumbare Mischung geeignet sind, sind z.B. Silbyk®9000, Silbyk®9020 und Silbyk®9230 von BYK Chemie.

Im Gegensatz zu organischen Peroxiden ist die Verwendung von Vernetzungsmitteln, die eine Aktivierung durch Strahlung erfordern, insbesondere von UV-Licht aktivierten Vernetzungsmittel, weniger bevorzugt, da solche Vernetzungsmittel für die Aktivierung mit Strahlung zugänglich sein müssen. Dies lässt sich bei den Anwendungen der schäumbaren thermoplastische Mischung der vorliegenden Erfindung aber nicht in allen Fällen ermöglichen.

Zudem hat sich der Zusatz solcher Vernetzungsmittel für die Verarbeitung der schäumbaren thermoplastische Mischung als nicht erforderlich erwiesen. Im Rahmen der vorliegenden Erfindung ist es daher bevorzugt, wenn die Mischung keine Vernetzungsmittel, die eine Aktivierung durch Strahlung erfordern, enthält.

Das langkettenverzweigte Polymer wirkt im Rahmen der vorliegenden Erfindung als Schaumstabilisator. Neben dem langkettenverzweigten Polymer können weitere Schaumstabilisatoren zugesetzt werden, es ist jedoch bevorzugt, wenn die erfindungsgemäße Mischung neben dem langkettenverzweigten Polymer keine weiteren Schaumstabilistoren enthält.

Aus der schäumbaren thermoplastischen Mischung kann der Schaumstoff auf übliche, dem Fachmann bekannte Weise durch Schäumung hergestellt werden. Damit die Polymermischung geschäumt werden kann, ist eine ausreichende Viskosität erforderlich. Hierfür wird sie erwärmt, in der Regel auf Temperaturen über den Erweichungspunkt oder über die Schmelztemperatur der Mischung. Da ein chemisches Treibmittel eingesetzt wird, muss sich das Treibmittel bei der Arbeitstemperatur für den Schäumvorgang zersetzen. Anschließend wird die geschäumte Struktur abgekühlt, um die Schaumstruktur zu fixieren.

Die Schäumung der schäumbaren thermoplastischen Mischung erfolgt bevorzugt durch freies Schäumen. Unter freiem Schäumen versteht man das Schäumen bei Umgebungsdruck und bei erhöhter Temperatur. Es kann, im Gegensatz zum Schäumen aus dem Extruder oder in einer geschlossenen Form, kein massiver Überdruck erzeugt werden, um hohe Mengen von Blähgas im Polymeren zu lösen.

Die Arbeitstemperaturen und Backzeiten richten sich naturgemäß insbesondere nach der eingesetzten Polymermischung. In der Regel können zum Schäumen der schäumbaren thermoplastischen Mischung z.B. Temperaturen von mindestens 140 °C, bevorzugt mindestens 160°C eingesetzt werden. Die Backzeit kann z.B. im Bereich von 3 bis 20 min, bevorzugt von 5 bis 12 min liegen. Es sind aber je nach eingesetzten Mischungen selbstverständlich auch andere Temperaturen und/oder Backzeiten denkbar.

Bei dem erhaltenen Schaumstoff handelt es sich vorzugsweise um einen Schaumstoff von relativ geringer Dichte, z.B. mit einer Dichte von 50 bis 500 kg/m$^3$, bevorzugt nicht mehr als 200 kg/m$^3$. Es sind aber natürlich auch Schaumstoffe mit höherer oder niedrigerer Dichte herstellbar. Der Schaumstoff ist vorzugsweise ein geschäumtes thermoplastisches Produkt.

Der erfindungsgemäße Schaumstoff eignet sich für alle üblichen Anwendungsgebiete, z.B. als Isolier-, Dicht- oder Dämmmaterial, z.B. für die Schalldämmung oder Wärmedämmung, oder als Formteil, z.B. als Polster für Möbel oder Matratzen. Der erfindungsgemäße Schaumstoff eignet sich besonders als Dicht- und Dämpfungsmaterial oder geschäumte Membranschicht. In Abdichtungsbahnen eignen sich z.B. geschäumte Schichten aus dem erfindungsgemäßen Schaumstoff mit einer Dichte von 200 bis 500 kg/m$^3$. Besonders bevorzugt sind thermoplastische Schäume aus dem erfindungsgemäßen Schaumstoff mit mit einer Dichte von 50 bis 200 kg/m$^3$, insbesondere für den Automobilbau.

## Beispiele

Im Folgenden werden einige Beispiele aufgeführt, welche die Erfindung weiter veranschaulichen, den Umfang der Erfindung aber in keiner Weise beschränken sollen. Sofern nicht anders angegeben, beziehen sich alle Anteile und Prozentsätze auf das Gewicht. Es werden folgende Rohstoffe eingesetzt.

| | |
|---|---|
| Elvax®265A | EVA-Copolymer mit einem Vinylacetatgehalt von 28 Gew.-% von DuPont, MFI = 3g/10 min, |
| Elvax®670 | EVA-Copolymer mit einem Vinylacetatgehalt von 12 Gew.-% von DuPont, MFI = 0,35 g/10 min |
| LKV-EVA | Langkettenverzweigtes EVA gemäß dem nachstehend beschriebenen Herstellungsverfahren |
| LD 380 BA | LDPE von Exxon Mobile, aus Röhrenreaktor, MFI = 1,9 g/10 min |
| LD 252 | LDPE von Exxon Mobile, aus Autoklavreaktor, MFI = 3,8 g/10 min |
| ENR 7086.01 | Ethylen-Buten-Copolymer, MFI <0,5 g/10min |
| Unicell®DL75N | katalysiertes Azodicarbonamid von Tracell, Gasausbeute: ca. 180 ml/g |
| Silbyk®9230 | oberflächenaktive Substanzen, einschließlich PDMS, und Copolymer von BYK Chemie |

## Bestimmung LCBI (Long chain branch Index)

Es gibt verschiedene Methoden, um den Grad der Langkettenverzweigung zu bestimmen. Eine ist der LCBI, die z.B. in der Literaturstelle "Shroff R.N., Mavridis H., Macromolecules, 32 (1999) 8454 - 8464" beschrieben wird. Hierfür macht man sich der Mark-Houwink Beziehung zwischen der Nullscherviskosität $\eta_0$ (ZSV = zero-shear viscosity) und dem Gewichtsmittel des Molekulargewichts (Mw) von Polymeren zunutze:

$$\eta_0 = K_\eta \cdot Mw^\alpha$$

Diese wohlbekannte Formel gilt für lineare Polymere. Der Wert Mw für ein verzweigtes Polymer, das gemäß obiger Formel aus dem experimentell ermittelten Wert $\eta_0$, aber mit den Werten der Konstanten $K_\eta$ und $\alpha$ für das lineare Polymeräquivalent bestimmt wird (Mw $\eta_0$), unterscheidet sich daher von dem mittels GPC ermittelten Wert für das verzweigte Polymer (Mw $_{GPC}$). Das Verhältnis von Mw $\eta_0$ zu Mw $_{GPC}$ wird als LCBI bezeichnet.

Das Gewichtsmittel des Molekulargewichts (Mw) von den hier aufgeführten Polymeren kann durch GPC bei 160°C in 1,2,4-Trichlorbenzol relativ zu Polystyrol-Standards bestimmt werden. Die Konstanten $K_\eta$ und $\alpha$ für kommerzielles EVA mit eine Vinylacetatgehalt von 28 Gew.-% wurden aus Literaturwerten wie folgt abgeleitet: $1,24 \times 10^{-15}$ und 3,59 für $K_\eta$ bzw. $\alpha$.

### Bestimmung Schaumdichte / Volumenexpansion

Dichten der Ausgangscompounds und der hergestellten Schaumstoffe wurden durch Messen des Gewichts der Proben in zwei Medien unterschiedlicher Dichte (Wasser und Luft) gemäß dem Archimedes-Prinzip ermittelt. Die Volumenexpansion wurde durch Division der Dichten der Probe vor und nach dem Schäumen bestimmt.

### Bestimmung der Viskosität

Der Betrag der komplexen Viskosität wurde mit einem Rheometer MCR 301 (Anton Paar) zwischen parallelen Platten bei 190°C und 1% Dehnung unter Schutzgas ($N_2$) in Oszillation als Funktion der Kreisfrequenz bestimmt.

### Bestimmung der Dehnviskosität / Dehnverhärtung

Die Dehnviskosität wurde mit einem Rheometer MCR 301 (Anton Paar), ausgestattet mit einem Sentmanat-Dehnviskositätstool (SER2) bei Dehnraten von 0,01 - 8 und Hencky-Dehnungen bis maximal 3,7 bestimmt. Die Dehnverhärtung (S) wurde bestimmt als Verhältnis der gemessenen Dehnviskosität bei einer Hencky-Dehnung von 1,9 und dem entsprechenden Wert des linear elastischen Anlaufverhaltens entsprechend dem Maxwell-Modell.

### Herstellung von langkettenverzweigtem EVA (LKV-EVA)

Eine ultralangkettenverzweigte Modifikation von EVA wurde auf Basis von Elvax®265A hergestellt. Hierfür wurde Elvax®265A mit 0,25 Gew.-% Luperox®A75FP (75 Gew.-% Dibenzoylperoxid in Wasser) einer Reaktivextrusion in einem Doppelschneckenextruder bei einer Temperatur von 180°C unterworfen. Die Schneckengeschwindigkeit betrug 200 U/min, was einer Aufenthaltszeit von etwa 2 min entspricht. Die erhaltene langkettenverzweigte Modifikation von EVA, die hier verwendet wurde, wies einen LCBI von 1,3 auf.

### Beispiele 1 bis 5

Es wurden Formulierungen auf Basis von Elvax®265A als Matrixmaterial hergestellt. Das Polymer wurde allein oder in Mischung mit einem Modifizierungsmittel ausgewählt aus Elvax®670, LKV-EVA, LD 380 BA, LD 252 und ENR 7086.01 verwendet. Für die Formulierung wurden zur Vergleichbarkeit immer Elvax®265A und gegebenenfalls Modifizierungsmittel in den in den Figuren gezeigten Gewichtsverhältnissen in einem Gesamtanteil von 93,5 Gew.-Teilen und Unicell DL75N als Treibmittel in einem Anteil von 6,5 Gew.-Teilen verwendet.

Die Formulierung wurde in einem Brabender-Innenmischer bei 40 U/min gemischt, wobei zuerst das Matrixpolymer, gefolgt von dem Modifizierungsmittel und anschließend das Treibmittel zugeführt wurden. Die vollständige Formulierung wurde für 2 min bei Schmelztemperaturen unter 105°C gemischt, um ein frühzeitiges Schäumen zu vermeiden.

Aus den erhaltenen Formulierungen wurden Proben in Scheibenform (Dicke 2 mm, Durchmesser 25 mm) auf ein mit Silicon beschichtetes Papier (Trägerpapier) gelegt und in einem Konvektionsofen bei 191°C für 5 und 12 min geschäumt.

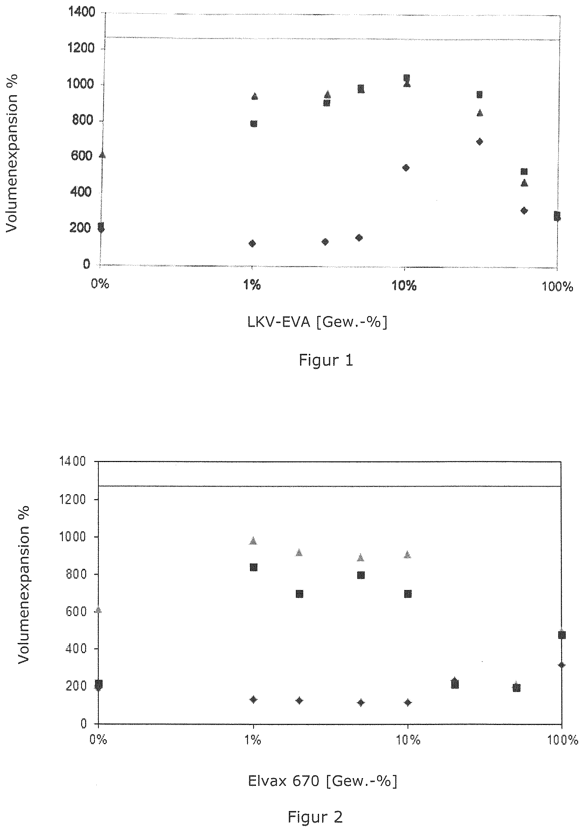

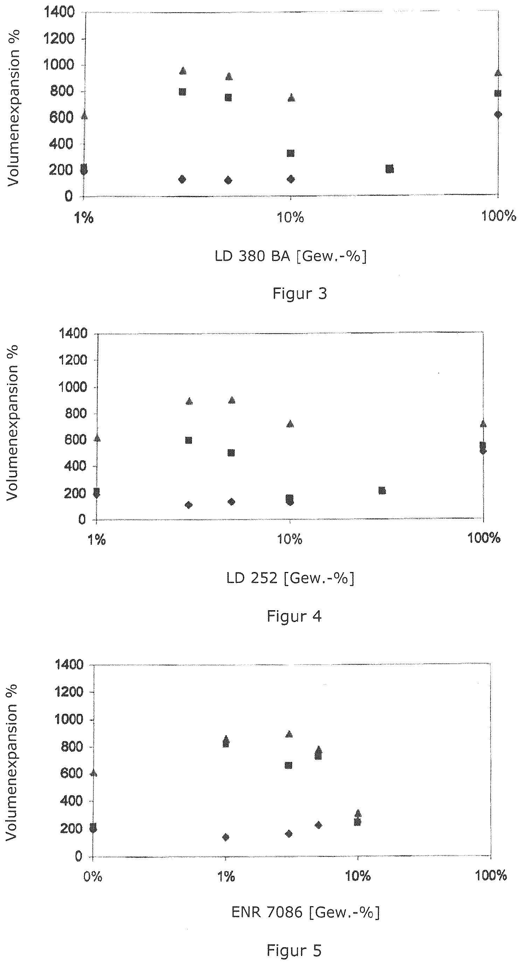

Die Volumenexpansion in Prozent durch die Modifiziermittel ist in den Figuren 1 bis 5 als Funktion von Backzeit und Gewichtsanteil des Modifiziermittels gezeigt. Die obere horizontale Linie in den Figuren gibt die theoretische maximale Volumenexpansion auf Basis der eingesetzten Menge an Treibmittel an. In den Figuren zeigen Dreiecke Werte für eine Backzeit von 5 min, Quadrate für eine Backzeit von 12 min an und Rauten für eine Backzeit von 20 min an.

Bei allen Modifizierungsmitteln kann bei geeigneten Mischungsverhältnissen und Backzeiten ein verlangsamtes Zellwachstum und damit eine erhöhte Volumenexpansion bei Backzeiten von 5 und 12 min im Vergleich zum Einsatz von EVA ohne Modifizierungsmittel beobachtet werden.

Das Einmischen von bis zu 10 Gew.-% langkettenverzweigter Polymere in lineare thermoplastische Polymere, bezogen auf das Gesamtgewicht beider Polymere, bewirkt überraschenderweise keine Zunahme der Scher- und Dehnviskosität, es wird jedoch trotzdem ein reduziertes Zellwachstum bewirkt. Erst bei einer Menge von mehr als 10 Gew.-

% beobachtet man eine Erhöhung der Viskosität.

Anders als die anderen Modifizierungsmittel, weisen Blends mit LKV-EVA die gleiche Aufschäum-Starttemperatur wie reines EVA auf. Obwohl nicht vernetzt und auch in den rheologischen Eigenschaften nicht verändert, kollabieren Schaumstrukturen aus Blends mit bis zu 10 Gew.-% LKV-EVA Polymeren zeitlich verzögert. Das Einmischen von 10-30 Gew.-% LKV-EVA in kommerzielles EVA führt zu einem optimalen Ergebnis hinsichtlich geringer Viskositätsveränderung, reduziertem Zellwachstum und erhöhter Schaumstabilität.

Insbesondere bleibt die anfängliche (5 min) Volumenexpansion bei einer Konzentration bis zu 10 Gew.-% LKV-EVA unverändert. Anders als bei den anderen Modifizierungsmitteln erhöhte sich die Volumenexpansion nach 12 min und insbesondere nach 20 min mit steigender LKV-EVA-Konzentration, wobei ein Maximum im Bereich von 10-30 Gew.-% erreicht wird. LKV-EVA ist das einzige getestete Modifizierungsmittel, dass selbst bei 20-minütiger Backzeit eine Verbesserung der Stabilität der Schaumstruktur ermöglicht.

Dagegen wirken hochmolekulares Elvax®670, LDPE und Ethylen-Buten-Copolymer bei Gehalten bis zu 10 Gew-% zwar als Nukleierungsmittel und reduzieren das diffusionsgesteuerte Zellwachstum, was die maximale Volumenexpansion erhöht bzw. deren Zenit zu längeren Backzeiten verschiebt. Sie ermöglichen aber keine Stabilisierung des Schaums, d.h. das Kollabieren des Schaums kann mit diesen Modifizierungsmitteln zeitlich nicht verhindert werden. Zudem bewirkt das weitere Erhöhen des Gehaltes des langkettenverzweigten Polymers zu 10-30 Gew-%, wenn es sich nicht um LKV-EVA handelt, ein massiv reduziertes Aufschäumen schon bei 5 min Backzeit. Der Effekt verkehrt sich also in das Gegenteil, analog dem Vergleichsbeispiel 1.

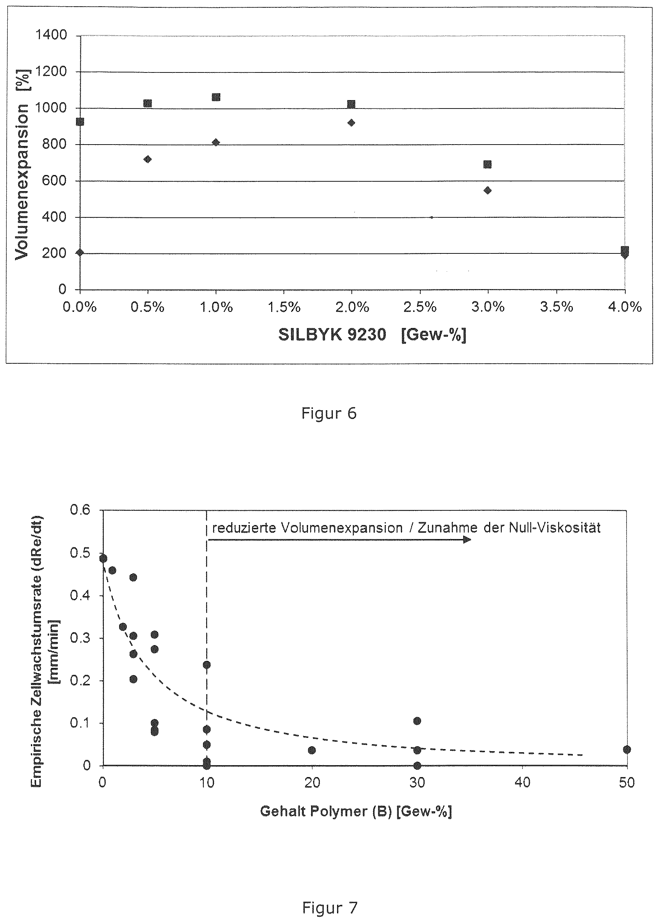

In Figur 7 ist die empirische Zellwachstumsrate in mm/min als Funktion der Konzentration der erfindungsgemäß eingesetzten Schaumstabilisatoren aufgezeigt. Die Proben wurden wie in den Beispielen 1 bis 5 hergestellt. Die mittlere Zellgröße wurde anhand von Bildern der gefärbten Oberflächen von Schnitten durch eine geschäumte Probe ermittelt, wofür die von der TU Darmstadt ermittelte Lince-Software eingesetzt wurde. Die empirische Zellwachstumsrate (dRe/dt) wurde gemäß der folgenden Gleichung bestimmt:

$$dRe/dt = [(\text{Zelldurchmesser(12 min Backzeit)} - \text{Zelldurchmesser(5 min Backzeit)}]/7$$

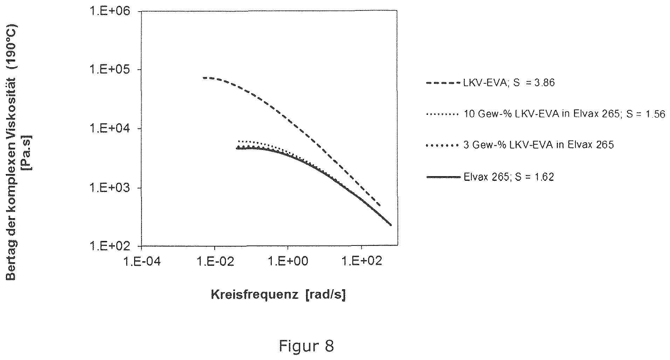

Die Ergebnisse zeigen das reduzierte Zellwachstum durch die Zugabe des Schaumstabilisators. Mengen bis zu 10 Gew.-% Schaumstabilisator bewirken keine Zunahme der Scher- und Dehnviskosität, wie in Figur 8 beispielhaft für LKV-EVA gezeigt wird.

**Vergleichsbeispiel 1**

Es wurden Formulierungen auf die gleiche Weise wie für die Beispiele 1 bis 5 hergestellt, außer dass statt der dort angegebenen Modifikatoren Silbyk®9230 als Schaumstabilisator eingesetzt wurden. Auch die Bewertung erfolgte analog wie in den Beispielen 1 bis 5. Die Ergebnisse und die Menge an eingesetztem Modifikator sind in Fig. 6 gezeigt.

**Patentansprüche**

1. Schäumbare thermoplastische Mischung, umfassend

(A) mindestens ein thermoplastisches Polymer ausgewählt aus Ethylen-Vinylacetat-Copolymer (EVA), Ethylen-Methylacrylat-Copolymer (EMA), Ethylen-Butylacrylat-Copolymer (EBA), Ethylen-Hexen-Copolymer, Ethylen-Buten-Copolymer, Etylen-Octen-Copolymer, Polyethylen (PE), Polypropylen (PP) und Ethylen-Propylen-Copolymer,
(B) mindestens ein langkettenverzweigtes Polymer mit einem g-Wert, bestimmt anhand von Hochtemperatur-GPC als Verhälnis der intrinsischen Viskosität des zu analysierenden Polymers zur intrinsischen Viskosität des PE-Standards NBS 1475 gemäß Kulin et al., Pure and Applied Chemistry 1988, 6, (9), S. 1403-1415, von unter 1 als Schaumstabilisator ausgewählt aus Ethylen-Vinylacetat-Copolymer (EVA), Ethylen-Methylacrylat-Copolymer (EMA), Ethylen-Butylacrylat-Copolymer (EBA), Ethylen-Hexen-Copolymer, Ethylen-Buten-Copolymer, Etylen-Octen-Copolymer, Polyethylen (PE), Polypropylen (PP) und Ethylen-Propylen-Copolymer und
(C) mindestens ein chemisches Treibmittel,
wobei das langkettenverzweigte Polymer (B) in einer Menge von 1 bis 30 Gew.-%, bezogen auf das Gesamtgewicht von thermoplastischem Polymer (A) und langkettenverzweigtem Polymer (B), enthalten ist und
für das thermoplastische Polymer (A) und das langkettenverzweigte Polymer (B) mindestens eines der folgenden Unterscheidungsmerkmale gilt:

1) der Wert des Schmelzflussindex (MFI), bestimmt bei 190°C und 2,16 kg gemäß ASTM D1238, des langkettenverzweigten Polymers (B) (MFI(B)) ist kleiner als der MFI-Wert des thermoplastischen Polymers (A) (MFI(A)), wobei der MFI(B) maximal 50% des MFI(A) beträgt,

2) der g-Wert des langkettenverzweigten Polymers (B) (g(B)) ist kleiner als der g-Wert des thermoplastischen Polymers (A) (g(A)), wobei g(B) maximal 80% von g(A) ist,

3) der Polymertyp des langkettenverzweigten Polymers (B) unterscheidet sich von dem Polymertyp des thermoplastischen Polymers (A).

2. Schäumbare thermoplastische Mischung nach Anspruch 1, **dadurch gekennzeichnet, dass** der Anteil des mindestens einen thermoplastischen Polymers (A) im Bereich von 40 bis 97 Gew.-%, bezogen auf das Gesamtgewicht der schäumbaren thermoplastischen Mischung, liegt.

3. Schäumbare thermoplastische Mischung nach Anspruch 1 oder Anspruch 2, **dadurch gekennzeichnet, dass** das langkettenverzweigte Polymer (B) in einer Menge von 1 bis 10 Gew.-%, bezogen auf das Gesamtgewicht von thermoplastischem Polymer (A) und langkettenverzweigtem Polymer (B), enthalten ist, wenn das langkettenverzweigte Polymer (B) sich nicht gemäß Unterscheidungsmerkmal 2) vom thermoplastischen Polymer (A) unterscheidet.

4. Schäumbare thermoplastische Mischung nach irgendeinem der Ansprüche 1 bis 3, **dadurch gekennzeichnet, dass** der Schaumstabilisator (B) in einer Menge von 1 bis 10 Gew.-%, bezogen auf das Gesamtgewicht von thermoplastischem Polymer (A) und langkettenverzweigtem Polymer (B), enthalten ist.

5. Schäumbare thermoplastische Mischung nach irgendeinem der Ansprüche 1 bis 3, **dadurch gekennzeichnet, dass** das langkettenverzweigte Polymer (B) sich gemäß Unterscheidungsmerkmal 2) vom thermoplastischen Polymer (A) unterscheidet und das langkettenverzweigte Polymer (B) in einer Menge von 10 bis 30 Gew.-%, bezogen auf das Gesamtgewicht von thermoplastischem Polymer (A) und langkettenverzweigtem Polymer (B), enthalten ist.

6. Schäumbare thermoplastische Mischung nach irgendeinem der Ansprüche 1 bis 5, **dadurch gekennzeichnet, dass** das thermoplastische Polymer (A) Ethylen-Vinylacetat-Copolymer (EVA) ist.

7. Schäumbare thermoplastische Mischung nach irgendeinem der Ansprüche 1 bis 6, **dadurch gekennzeichnet, dass** das langkettenverzweigte Polymer (B) ein Ethylen-Vinylacetat-Copolymer ist.

8. Schäumbare thermoplastische Mischung nach irgendeinem der Ansprüche 1 bis 7, **dadurch gekennzeichnet, dass** das thermoplastische Polymer (A) einen Schmelzflussindex (MFI) im Bereich von 0,1 bis 100 g/10 min aufweist.

9. Schäumbare thermoplastische Mischung nach irgendeinem der Ansprüche 1 bis 8, **dadurch gekennzeichnet, dass** das langkettenverzweigte Polymer (B) einen LCBI, bestimmt gemäß dem auf S. 15 beschriebenen Verfahren, von mindestens 1,1 aufweist bzw. einen g-Wert von nicht mehr als 0,8 aufweist.

10. Schäumbare thermoplastische Mischung nach irgendeinem der Ansprüche 1 bis 9, **dadurch gekennzeichnet, dass** der Anteil des mindestens einen chemischen Treibmittels im Bereich von 0,1 bis 20 Gew.-%, bezogen auf das Gesamtgewicht der schäumbaren thermoplastischen Mischung, liegt.

11. Schäumbare thermoplastische Mischung nach irgendeinem der Ansprüche 1 bis 10, **dadurch gekennzeichnet, dass** sie spritzgießfähig ist ohne aufzuschäumen.

12. Schäumbare thermoplastische Mischung nach irgendeinem der Ansprüche 1 bis 11, **dadurch gekennzeichnet, dass** das thermoplastische Polymer (A) und das langkettenverzweigte Polymer (B) vom gleichen Polymer- bzw. Copolymertyp sind, wobei das thermoplastische Polymer (A) und das langkettenverzweigte Polymer (B) bevorzugt beide ein Ethylen-Vinylacetat-Copolymer sind.

13. Schäumbare thermoplastische Mischung nach irgendeinem der Ansprüche 1 bis 11, **dadurch gekennzeichnet, dass**
das thermoplastische Polymer (A) ausgewählt ist aus Ethylen-Vinylacetat-Copolymer (EVA), Ethylen-Methylacrylat-Copolymer (EMA) oder Ethylen-Butylacrylat-Copolymer (EBA) und das langkettenverzweigte Polymer (B) ausgewählt ist aus Polyethylen (PE), Ethylene-Hexen-Copolymer, Ethylen-Buten-Copolymer oder Etylen-Octen-Copolymer.

14. Schaumstoff, erhältlich durch Erwärmen der schäumbaren thermoplastischen Mischung nach irgendeinem der Ansprüche 1 bis 13.

15. Verfahren zur Herstellung eines Schaumstoffs, bei dem eine schäumbare thermoplastische Mischung nach einem der Ansprüche 1 bis 13 erwärmt wird, um den Schaumstoff zu bilden.

**Claims**

1.  Foamable thermoplastic mixture, comprising

    (A) at least one thermoplastic polymer selected from ethylene-vinyl acetate copolymer (EVA), ethylene methyl acrylate copolymer (EMA), ethylene butyl acrylate copolymer (EBA), ethylene-hexene copolymer, ethylene-butene copolymer, ethylene-octene copolymer, polyethylene (PE), polypropylene (PP) and ethylene-propylene copolymer,
    (B) at least one long chain branched polymer with a g value, determined on the basis of high temperature GPC, as the ratio of the intrinsic viscosity of the polymer to be analyzed to the intrinsic viscosity of the PE-Standard NBS 1475 according to Kulin et al., Pure and Applied Chemistry 1988, 6, (9), p. 1403-1415, of less than 1 as a foam stabilizer selected from ethylene-vinyl acetate copolymer (EVA), ethylene methyl acrylate copolymer (EMA), ethylene butyl acrylate copolymer (EBA), ethylene-hexene copolymer, ethylene-butene copolymer, ethylene-octene copolymer, polyethylene (PE), polypropylene (PP) and ethylene-propylene copolymer and
    (C) at least one chemical blowing agent,
    wherein the long chain branched polymer (B) is present in an amount of 1 to 30 wt.% relative to the total weight of thermoplastic polymer (A) and long chain branched polymer (B), and
    at least one of the following distinguishing features applies for the thermoplastic polymer (A) and the long chain branched polymer (B):

    1) the value of the melt flow index (MFI), determined at 190 °C and 2.16 kg according to ASTM D1238, of the long chain branched polymer (B) (MFI(B)) is smaller than the MFI value of the thermoplastic polymer (A) (MFI(A)), wherein MFI(B) is a maximum of 50% of MFI(A),
    2) the g value of the long chain branched polymer (B) (g(B)) is smaller than the g value of the thermoplastic polymer (A) (g(A)), wherein g(B) is a maximum of 80% of g(A),
    3) the polymer type of the long chain branched polymer (B) differs from the polymer type of the thermoplastic polymer (A).

2.  Foamable thermoplastic mixture according to claim 1, **characterized in that** the fraction of the at least one thermoplastic polymer (A) is in the range of 40 to 97 wt.% relative to the total weight of the foamable thermoplastic mixture.

3.  Foamable thermoplastic mixture according to claim 1 or claim 2, **characterized in that** the long chain branched polymer (B) is present in an amount of 1 to 10 wt.% relative to the total weight of thermoplastic polymer (A) and long chain branched polymer (B) if the long chain branched polymer (B) does not differ from the thermoplastic polymer (A) according to distinguishing feature 2).

4.  Foamable thermoplastic mixture according to any of claims 1 to 3, **characterized in that** the foam stabilizer (B) is present in an amount of 1 to 10 wt.% relative to the total weight of thermoplastic polymer (A) and long chain branched polymer (B).

5.  Foamable thermoplastic mixture according to any of claims 1 to 3, **characterized in that** the long chain branched polymer (B) differs from the thermoplastic polymer (A) according to distinguishing feature 2) and the long chain branched polymer (B) is present in an amount of 10 to 30 wt.% relative to the total weight of thermoplastic polymer (A) and long chain branched polymer (B).

6.  Foamable thermoplastic mixture according to any of claims 1 to 5, **characterized in that** the thermoplastic polymer (A) is ethylene-vinyl acetate copolymer (EVA).

7. Foamable thermoplastic mixture according to any of claims 1 to 6, **characterized in that** the long chain branched polymer (B) is an ethylene-vinyl acetate copolymer.

8. Foamable thermoplastic mixture according to any of claims 1 to 7, **characterized in that** the thermoplastic polymer (A) has a melt flow index (MFI) in the range of 0.1 to 100 g/10 min.

9. Foamable thermoplastic mixture according to any of claims 1 to 8, **characterized in that** the long chain branched polymer (B) has an LCBI, determined by the method described on p. 15, of at least 1.1 and a g value of no more than 0.8, respectively.

10. Foamable thermoplastic mixture according to any of claims 1 to 9, **characterized in that** the fraction of the at least one chemical blowing agent is in the range of 0.1 to 20 wt.% relative to the total weight of the foamable thermoplastic mixture.

11. Foamable thermoplastic mixture according to any of claims 1 to 10, **characterized in that** it is injection molded without foaming.

12. Foamable thermoplastic mixture according to any one of claims 1 to 11, **characterized in that** the thermoplastic polymer (A) and the long chain branched polymer (B) are of the same polymer or copolymer type, wherein the thermoplastic polymer (A) and the long chain branched polymer (B) preferably are both ethylene-vinyl acetate copolymers.

13. Foamable thermoplastic mixture according to any one of claims 1 to 11, **characterized in that** the thermoplastic polymer (A) is selected from ethylene-vinyl acetate copolymer (EVA), ethylene methyl acrylate copolymer (EMA) or ethylene butyl acrylate copolymer (EBA) and the long chain branched polymer (B) is selected from polyethylene (PE), ethylene-hexene copolymer, ethylene-butene copolymer or ethylene-octene copolymer.

14. Foamed material obtainable by heating the foamable thermoplastic mixture according to any one of claims 1 to 13.

15. Method for producing a foamed material, in which a foamable thermoplastic mixture according to one of claims 1 to 13 is heated to form the foamed material.


**Revendications**

1. Mélange thermoplastique moussable, comprenant

(A) au moins un polymère thermoplastique choisi parmi un copolymère d'éthylène-acétate de vinyle (EVA), un copolymère d'éthylène-acrylate de méthyle (EMA), un copolymère d'éthylène-acrylate de butyle (EBA), un copolymère d'éthylène-hexène, un copolymère d'éthylène-butène, un copolymère d'éthylène-octène, le polyéthylène (PE), le polypropylène (PP) et un copolymère d'éthylène-propylène,
(B) au moins un polymère ramifié en longues chaînes, présentant une valeur g, déterminée par CPG à haute température comme rapport de la viscosité intrinsèque du polymère à analyser à la viscosité intrinsèque du témoin de PE NBS 1475 selon Kulin et al., Pure and Applied Chemistry 1988, 6, (9), pages 1403-1415, inférieure à 1 comme stabilisant de mousse, choisi parmi un copolymère d'éthylène-acétate de vinyle (EVA), un copolymère d'éthylène-acrylate de méthyle (EMA), un copolymère d'éthylène-acrylate de butyle (EBA), un copolymère d'éthylène-hexène, un copolymère d'éthylène-butène, un copolymère d'éthylène-octène, le polyéthylène (PE), le polypropylène (PP) et un copolymère d'éthylène-propylène et
(C) au moins un agent gonflant chimique,
le polymère ramifié en longues chaînes (B) étant contenu en une quantité de 1 à 30% en poids, par rapport au poids total du polymère thermoplastique (A) et du polymère ramifié en longues chaînes (B) et au moins une des caractéristiques distinctives suivantes étant d'application pour le polymère thermoplastique (A) et le polymère ramifié en longues chaînes (B)

1) la valeur de l'indice de fusion (MFI), déterminé à 190°C et à 2,16 kg selon la norme ASTM D1238, du polymère ramifié en longues chaînes (B) (MFI(B)) est inférieure à la valeur du MFI du polymère thermoplastique (A) (MFI(A)), le MFI(B) valant au maximum 50% du MFI(A),
2) la valeur g du polymère ramifié en longues chaînes (B) (g(B)) est inférieure à la valeur g du polymère thermoplastique (A) (g(A)), g(B) valant au maximum 80% de g(A),
3) le type de polymère du polymère ramifié en longues chaînes (B) se distingue du type de polymère du polymère thermoplastique (A).

2. Mélange thermoplastique moussable selon la revendication 1, **caractérisé en ce que** la proportion dudit au moins un polymère thermoplastique (A) se situe dans la plage de 40 à 97% en poids, par rapport au poids total du mélange thermoplastique moussable.

3. Mélange thermoplastique moussable selon la revendication 1 ou 2, **caractérisé en ce que** le polymère ramifié en longues chaînes (B) est contenu en une quantité de 1 à 10% en poids, par rapport au poids total du polymère thermoplastique (A) et du polymère ramifié en longues chaînes (B) lorsque le polymère ramifié en longues chaînes (B) ne se distingue pas du polymère thermoplastique (A) selon la caractéristique distinctive 2).

4. Mélange thermoplastique moussable selon l'une quelconque des revendications 1 à 3, **caractérisé en ce que** le stabilisant de mousse (B) est contenu en une quantité de 1 à 10% en poids, par rapport au poids total du polymère thermoplastique (A) et du polymère ramifié en longues chaînes (B).

5. Mélange thermoplastique moussable selon l'une quelconque des revendications 1 à 3, **caractérisé en ce que** le polymère ramifié en longues chaînes (B) se distingue du polymère thermoplastique (A) selon la caractéristique distinctive 2) et le polymère ramifié en longues chaînes (B) est contenu en une quantité de 10 à 30% en poids, par rapport au poids total du polymère thermoplastique (A) et du polymère ramifié en longues chaînes (B).

6. Mélange thermoplastique moussable selon l'une quelconque des revendications 1 à 5, **caractérisé en ce que** le polymère thermoplastique (A) est un copolymère d'éthylène-acétate de vinyle (EVA).

7. Mélange thermoplastique moussable selon l'une quelconque des revendications 1 à 6, **caractérisé en ce que** le polymère ramifié en longues chaînes (B) est un copolymère d'éthylène-acétate de vinyle.

8. Mélange thermoplastique moussable selon l'une quelconque des revendications 1 à 7, **caractérisé en ce que** le polymère thermoplastique (A) présente un indice de fusion (MFI) dans la plage de 0,1 à 100 g/10 min.

9. Mélange thermoplastique moussable selon l'une quelconque des revendications 1 à 8, **caractérisé en ce que** le polymère ramifié en longues chaînes (B) présente un LCBI (indice de ramification en longues chaînes), déterminé selon le procédé décrit à la page 15, d'au moins 1,1 ou présente une valeur g qui n'est pas supérieure à 0,8.

10. Mélange thermoplastique moussable selon l'une quelconque des revendications 1 à 9, **caractérisé en ce que** la proportion dudit au moins un agent gonflant chimique se situe dans la plage de 0,1 à 20% en poids, par rapport au poids total du mélange thermoplastique moussable.

11. Mélange thermoplastique moussable selon l'une quelconque des revendications 1 à 10, **caractérisé en ce qu'**il peut être moulé par injection sans qu'il ne mousse.

12. Mélange thermoplastique moussable selon l'une quelconque des revendications 1 à 11, **caractérisé en ce que** le polymère thermoplastique (A) et le polymère ramifié en longues chaînes (B) sont du même type de polymère ou de copolymère, le polymère thermoplastique (A) et le polymère ramifié en longues chaînes (B) étant de préférence tous les deux un copolymère d'éthylène-acétate de vinyle.

13. Mélange thermoplastique moussable selon l'une quelconque des revendications 1 à 11, **caractérisé en ce que** le polymère thermoplastique (A) est choisi parmi un copolymère d'éthylène-acétate de vinyle (EVA), un copolymère d'éthylène-acrylate de méthyle (EMA) ou un copolymère d'éthylène-acrylate de butyle (EBA) et le polymère ramifié en longues chaînes (B) est choisi parmi le polyéthylène (PE), un copolymère d'éthylène-hexène, un copolymère d'éthylène-butène ou un copolymère d'éthylène-octène,

14. Mousse, pouvant être obtenue par chauffage du mélange thermoplastique moussable selon l'une quelconque des revendications 1 à 13.

15. Procédé pour la fabrication d'une mousse, dans lequel un mélange thermoplastique moussable selon l'une quelconque des revendications 1 à 13 est chauffé pour former la mousse.

Figur 1

Figur 2

Figur 3

Figur 4

Figur 5

Figur 6

Figur 7

Figur 8

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 4226946 A
- US 5356941 A
- WO 0222339 A1
- US 6150428 A
- WO 2008019400 A1
- US 5932659 A

**In der Beschreibung aufgeführte Nicht-Patentliteratur**

- **KLEMPNER, D. ; FRISCH, K. C.** Handbook of Polymeric Foams and Foam Technology. Hanser Publisher, 1991, 238
- **KULIN, L. I. ; MEIJERINK, N. L. ; STARCK, P.** *Pure and Applied Chemistry,* 1988, vol. 6 (9), 1403-1415
- **SHROFF R.N. ; MAVRIDIS H.** *Macromolecules,* 1999, vol. 32, 8454-8464